# EUROPÄISCHE PATENTSCHRIFT

(11) **EP 0 556 719 B1**
(45) Veröffentlichungstag und Bekanntmachung des Hinweises auf die Patenterteilung: **16.10.1996**
(21) Anmeldenummer: 93102138.0
(22) Anmeldetag: 11.02.1993
(51) Int. Cl.: B60R 22/42, B60R 22/28

(54) **Sicherheitsgurt-Rückhaltesystem für Fahrzeuge**
Seat belt restraint system for vehicles
Système de retenue par ceinture de sécurité pour véhicules

(30) Priorität: 20.02.1992 DE 9202219 U
(43) Veröffentlichungstag der Anmeldung: 25.08.1993
(73) Patentinhaber: TRW Occupant Restraint Systems GmbH, D-73553 Alfdorf (DE)
(72) Erfinder: Frei, Bernhard, W-7076 Waldstetten (DE); Röhrle, Martin, W-7075 Mutlangen (DE); Hirzel, Uwe, W-7150 Backnang (DE); Hönl, Wolf-Dieter, W-7071 Böbingen (DE)
(74) Vertreter: Degwert, Hartmut, Dipl.-Phys.

(56) Entgegenhaltungen:
- EP-A- 0 487 760
- WO-A-88/09274
- DE-A- 2 460 163
- DE-A- 3 421 837
- GB-A- 2 216 773

## Beschreibung

Die Erfindung betrifft ein Sicherheitsgurt-Rückhaltesystem für Fahrzeuge, mit einem Gurtaufroller und einer diesem nachgeordneten Gurtband-Klemmeinrichtung mit zwei einander gegenüberliegend beiseitig des Gurtbandes angeordneten Klemmkeilen, die sich mit vom Gurtband abgewandten Gleitflächen gegen gehäusefeste Stützflächen abstützen und fahrzeugsensitiv und/oder gurtbandsensitiv aus einer Ruhestellung gemeinsam mit ihren einander gegenüberliegenden Klemmflächen in Richtung auf eine in Gurtabzugsrichtung gelegene Klemmstellung in Anlage am Gurtband beweglich sind.

In einem solchen System, das beispielsweise aus der DE-OS 33 30 938 bekannt ist, hat die Gurtband-Klemmeinrichtung die Aufgabe, bei einer fahrzeugsensitiv oder gurtbandsensitiv ausgelösten Sperrung des Gurtaufrollers den Filmspuleneffekt zu eliminieren oder zumindest zu verringern, der bei herkömmlichen Gurtaufrollern ursächlich für das Abziehen einiger Zentimeter Gurtbandlänge durch Straffung des Gurtbandwickels nach Blockierung der Gurtspule ist. Ferner entlastet die Gurtband-Klemmeinrichtung den Gurtaufroller, so daß dieser für geringe mechanische Belastungen dimensionierbar ist.

Gurtband-Klemmeinrichtungen müssen über ihre in Richtung des Gurtbandverlaufs relativ geringe Längenausdehnung eine sehr große, auf das Gurtband ausgeübte Kraft aufnehmen können. Daher wird das Gurtband im Falle eines Fahrzeugaufpralls im Bereich des Angriffs der Klemmeinrichtung außerordentlich hohen Belastungen ausgesetzt. Aber auch im normalen Fahrzeugbetrieb kann das Gurtband durch die Gurtband-Klemmeinrichtung beansprucht werden. Man möchte die Ansprechschwelle der Gurtband-Klemmeinrichtung nämlich möglichst niedrig legen, damit letztere bei einem Fahrzeugaufprall möglichst frühzeitig in Funktion tritt. Bei niedriger Ansprechschwelle wird das Gurtband aber auch im normalen Fahrzeugbetrieb häufig und zumeist an derselben Stelle von der Gurtband-Klemmeinrichtung beaufschlagt und kann im Laufe der Zeit sicherheitsrelevant beschädigt werden.

Die bekannte Ausführung der Gurtband-Klemmeinrichtung mit zwei beidseitig des Gurtbandes angeordneten Klemmkeilen ist geeignet, die genannten Beanspruchungen zu verringen, da sich ihre Klemmkeile synchron miteinander bewegen, so daß keine das Gurtband beanspruchende Relativbewegung zwischen ihnen stattfindet, und das Gurtband beidseitig symmetrisch belastet wird. Im praktischen Einsatz reißt das Gurtband dennoch bereits bei Beanspruchungen, die wesentlich unter der statischen Reißfestigkeit des Gurtbandes liegen.

Bei einem aus der GB-A-2 216 773 bekannten Sicherheitsgurt-Rückhaltesystem der eingangs genannten Art sind der Gurtaufroller und die Gurtband-Klemmeinrichtung in bestimmten Grenzen relativ zueinander beweglich am Fahrzeugchassis angebracht. Bei einer entsprechenden Belastung des Gurtbandes wird zunächst der Gurtaufroller zur Gurtband-Klemmeinrichtung hin verlagert, wodurch die Gurtband-Klemmeinrichtung aktiviert wird. Die Gurtband-Klemmeinrichtung ist über plastisch verformbare Mittel mit dem Fahrzeugchassis verbunden. Die Krafteinleitung in das Fahrzeugchassis bei aktiviertem Rückhaltesystem erfolgt lediglich über die Gurtband-Klemmeinrichtung und die Verbindungsmittel zwischen dieser Klemmeinrichtung und dem Chassis. Um Raum zu sparen, ist vorzugsweise vorgesehen, die im Fall eines belasteten Rückhaltesystems auftretende Verlagerung des Gurtaufrollers gegenüber der der Klemmeinrichtung zu begrenzen. In diesem Fall wird die dem Gurtaufroller zugeordnete Sperre deaktiviert, sobald die Klemmeinrichtung weitergehend verlagert wird.

Der Erfindung liegt die Aufgabe zugrunde, die dynamische Belastbarkeit bekannter Sicherheitsgurt-Rückhaltesysteme noch weiter zu steigern.

Diese Aufgabe wird bei einem gattungsgemäßen Sicherheitsgurt-Rückhaltesystem erfindungsgemäß dadurch gelöst, daß der fahrzeugsensitiv und/oder gurtbandsensitiv sperrbare Gurtaufroller und die Gurtband-Klemmeinrichtung durch Verbindungsmittel derart miteinander verbunden sind, daß die Krafteinleitung in das aktivierte Rückhaltesystem stets über die Gurtband-Klemmeinrichtung, die Verbindungsmittel und den Gurtaufroller erfolgt, und daß die Verbindungsmittel unter plastischer Verformung nachgeben und eine begrenzte Entfernung der Gurtband-Klemmeinrichtung von dem Gurtaufroller zulassen, wenn die auf das Gurtband ausgeübte Kraft einen vorbestimmten Wert übersteigt.

Bei einer bevorzugten Ausführungsform tauchen die vorzugsweise reibungsfördernd strukturierten Klemmflächen der Klemmkeile an ihrer dem Gurtaufroller zugewandten Seiten stärker in das Gurtbandmaterial ein als an der anderen Seite. An letzterer, besonders stark zugbeanspruchten Seite wirken bei geeigneter Wahl des Winkels zwischen den Klemmflächen nur geringe oder sogar keine Querkräfte auf das Gurtband, so daß eine Tendenz zum Reißen aufgrund der vorgenannten Gründe entfällt. Daß die im weiteren Gurtbandverlauf zwischen den Klemmkeilen auftretenden Querkräfte zum Gurtaufroller hin stetig zunehmen, ist unschädlich, da zugleich die Zugbeanspruchung abnimmt. Durch die beidseitig symmetrische Querbelastung des Gurtbandes, die in demselben Maße zunimmt, wie die Zugbelastung geringer wird, läßt sich eine erhebliche Steigerung der dynamischen Reißfestigkeit des Gurtaufrollers erzielen.

Zweckmäßig ist es, wenn die Klemmflächen in Ruhestellung etwa parallel zur Richtung des Gurtbandabzugs verlaufen. Beim nächsten Kontakt mit dem Gurtband verlaufen die Klemmflächen dann zunächst parallel zueinander und zum Gurtband, so daß sich die schwachen, aber relativ häufigen anfänglichen Reibbeanspruchungen des Gurtbandes beim Ansprechen der Gurtband-Klemmeinrichtung auf eine möglichst große Fläche verteilen und ein guter Mitnahmeeffekt für die Klemmkeile erzielt wird.

Die Entfernung der Gurtband-Klemmeinrichtung vom Gurtaufroller bei gleichzeitiger plastischer Verformung der Verbindungsmittel wird ausgenutzt, um Belastungsspitzen im Gurtsystem abzubauen, wobei die relativ geringe Längung des Systems nicht nur unschädlich, sondern sogar erwünscht ist. Die im Zuge der plastischen Verformung der Verbindungsmittel blockierte Gurtspule nimmt Zugkräfte auf, welche die Kräfte übersteigen, für deren Aufnahme die Gurtband-Klemmeinrichtung maximal ausgelegt ist. Die Krafteinleitung in das Rückhaltesystem verteilt sich dann besonders gleichmäßig entlang des Gurtbandes. Die Gurtspule und ihre Lagerung, aber auch die Gurtband-Klemmeinrichtung können wesentlich schwächer als bei herkömmlichen Lösungen dimensioniert sein und somit von geringem Gewicht und kostengünstig herstellbar sein. Die Gurtspule und die Gurtband-Klemmeinrichtung können im Baukastensystem für verschiedene Anforderungen an das Sicherheitsgurt-Rückhaltesystem zusammengestellt sein.

Vorteilhafte Ausführungsformen bilden die Gegenstände der anderen Unteransprüche.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
Fig. 1 eine teilweise geschnittene Seitenansicht einer Ausführungsform des Gurtaufrollers mit nachgeschalteter Gurtband-Klemmeinrichtung mit doppeltem Klemmkeil;
Fig. 2 eine Schnittansicht dieser Ausführungsform entlang einer Linie II-II in Fig. 1;
Fig. 3 eine schematische Schnittdarstellung der Gurtband-Klemmeinrichtung mit doppeltem Klemmkeil nach Fig. 1;
Fig. 4 eine schematische Detaildarstellung im Schnitt der Gurtband-Klemmeinrichtung nach Fig. 3;
Figuren 5 und 6 eine schematische Detaildarstellung im Schnitt von weiteren Ausführungsformen einer Gurtband-Klemmeinrichtung;
Fig. 7 eine Perspektivansicht eines Gurtaufrollers und einer mit diesem über plastisch verformbare Verbindungsmittel verbundenen Gurtband-Klemmeinrichtung im Zustand vor dem Auftreten einer hohen Belastung;
Fig 8 das in Fig. 4 gezeigte System nach dem Auftreten einer hohen Belastung;
Fig 9 den prinzipiellen Kraftverlauf am Gurtband als Funktion der Gurtbandlängung bei einem System nach den Fig. 1 und 2 bzw. 4 und 5; und
Fig. 10 bis 14 weitere Ausführungsformen der Verbindungsmittel.

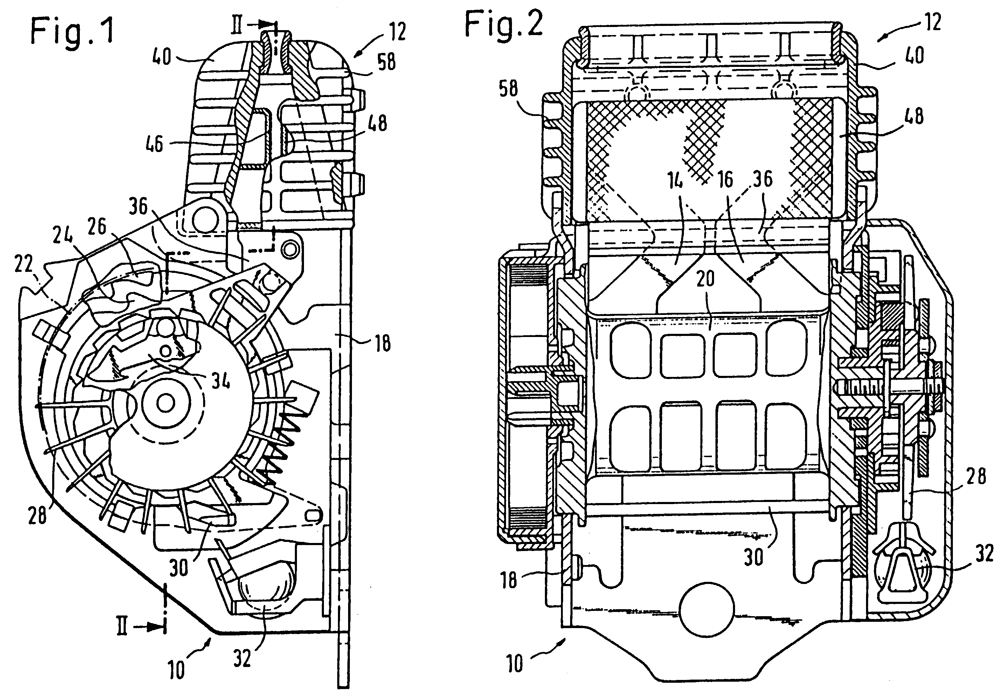

Bei der in den Figuren 1 und 2 gezeigten Ausführungsform sind ein mit 10 bezeichneter, allgemein bekannter Gurtaufroller und eine allgemein mit 12 bezeichnete Gurtband-Klemmeinrichtung über Stege 14 und 16 miteinander verbunden.

Der Gurtaufroller 10 enthält ein U-förmiges Gehäuse 18, in dessen Seitenschenkel eine Gurtspule 20 radial nachgiebig gelagert ist. Auf die Gurtspule 20 ist ein Gurtband 22 teilweise aufgewickelt, das (nicht eingezeichnet) mittig durch die Gurtband-Klemmeinrichtung 14 hindurch verläuft. An die Gurtspule 20 sind seitliche Sperrzahnräder 24 angeformt, die bei Auslenkung der Gurtspule 20 mit Sperrverzahnungen 26 zusammenwirken, die in Öffnungen der Seitenschenkel des Gehäuses 18 angebracht sind. An einem der Sperrzahnräder 24 ist ferner eine sternförmig verzahnte Steuerscheibe 28 drehbar gelagert. Diese Steuerscheibe 28 steuert in bekannter Weise eine Sperrklinke 30 teilweise in Eingriff mit den Sperrzahnrädern 24, wenn ein fahrzeugsensitiver Kugelsensor 32 auf eine Fahrzeugverzögerung oder ein nicht detailliert eingezeichneter Trägheitssensor 34 auf einen Gurtbandabzug anspricht. Bei weiterem Gurtbandabzug greifen die Sperrzahnräder 24 in die Sperrverzahnungen 26, so daß die Gurtspule 20 gegenüber einer Drehung in Gurtabzugsrichtung blockiert ist. Die Steuerscheibe 28 lenkt zugleich mit der Ansteuerung der Sperrklinke 30 einen am Gehäuse 18 gelagerten Umlenkhebel 36 in Richtung auf die Gurtband-Klemmeinrichtung 12 aus.

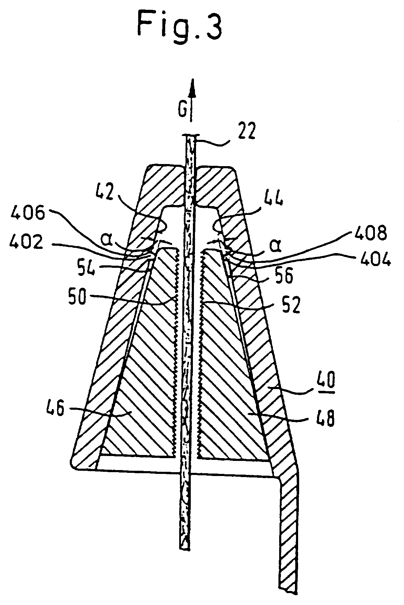

Der Aufbau der Gurtband-Klemmeinrichtung 12 wird aus Fig. 3 am deutlichsten. Ein Klemmgehäuse 40 umgibt das Gurtband 22 und ist auf seiner Innenseite mit zwei bezüglich der Gurtbandebene spiegelsymmetrischen und in Gurtabzugsrichtung G winklig zusammenlaufenden Stützflächen 42 und 44 versehen. Zwischen jeder Stützfläche 42 bzw. 44 und dem Gurtband 22 ist ein Klemmkeil 46 bzw. 48 angeordnet. Die beiden Klemmkeile 46 und 48 sind spiegelsymmetrisch bezüglich der Gurtbandebene ausgebildet. Im Ruhezustand des Rückhaltesystems sorgen nicht eingezeichnete Federn dafür, daß sich die Klemmkeile 46, 48 im Abstand zum Gurtband 22 befinden, wobei dem Gurtband 22 zugewandte Klemmflächen 50, 52, der Klemmkeile 46, 48 parallel zueinander und zur Richtung G des Gurtbandabzugs verlaufen. Die Klemmflächen 50, 52 sind reibungsfördernd strukturiert, und zwar vorzugsweise mit Zähnen besetzt, deren Zahnteilung der Struktur und dem Dehnungsverhalten des Gurtbandes 22 angepaßt ist, um einen zuverlässigen, gleichzeitig aber materialschonenden Eingriff in das Gurtband 22 zu gewährleisten. Die dem Gurtband 22 abgewandten Rückseiten der Klemmkeile 46 und 48 sind Gleitflächen 54 bzw. 56, die jeweils an einer der Stützflächen 42, 44 des Klemmgehäuses 40 entlanggleiten, wenn die Klemmkeile durch den Umlenkhebel 36 in Gurtabzugsrichtung G bewegt werden. Dabei tauchen die Zähne der Klemmflächen 50, 52 in das Gurtbandmaterial ein. Die Winkel, die die Stützflächen 42, 44 und die Gleitflächen 54, 56 mit der Gurtabzugsrichtung G einschließen, sind so gewählt, daß jeder folgende Gurtbandabzug zum selbsttätigen Verkeilen der Klemmkeile 46, 48 führt, so daß das Gurtband 22 gegenüber der Gurtband-Klemmeinrichtung 12 festliegt. Für ein leichtgängiges Einrücken der Klemmkeile 46, 48 können die Stützflächen 42, 44 bzw. die Gleitflächen 54, 56 mit einer Gleitbeschichtung versehen sein.

Für eine stetige Übertragung der auf das Gurtband 22 wirkenden Zugkräfte auf die Gurtband-Klemmeinrichtung 12 ist der Winkel, den die beiden Gleitflächen 54, 56 miteinander einschließen, wenn ihre Klemmflächen parallel zur Gurtbandfläche sind, etwas kleiner als der Winkel, den die Stützflächen 42, 44 miteinander einschließen. Im Ausführungsbeispiel beträgt der Winkel zwischen den Gleitfächen 54 und 56 etwa 27 Grad, während der Winkel zwischen den Stützflächen 42 und 44 etwa 26 Grad beträgt, wenn die Klemmflächen 50, 52 im Ruhezustand parallel zum Gurtband 22 verlaufen. Zwischen je einer Gleitfläche 42 bzw. 44 und der dazugehörigen Stützfläche 54 bzw. 56 besteht also ein Differenzwinkel α von etwa einem halben Grad. Bei Aktivierung der Gurtband-Klemmeinrichtung 12 graben sich die dem Gurtaufroller 10 benachbarten Teile der Klemmflächen 50, 52 also stärker in das Gurtbandmaterial ein als ihre in Gurtabzugsrichtung gelegenen Teile. Der Druck und damit die Kraftübertragung zwischen dem Gurtband 22 und der Gurtband-Klemmeinrichtung 12 nehmen also in Gurtabzugsrichtung G stetig ab. Idealerweise wird der Differenzwinkel α in Abstimmung auf die Dicke und die Dehnung des Gurtbandmaterials und auf die Abmessungen der Gurtband-Klemmeinrichtung 12 so gewählt, daß am in Gurtabzugsrichtung G gelegenen Ende der Klemmflächen 50, 52 kein oder nur ein relativ geringer Kraftübertrag zwischen dem Gurtband 22 und der Gurtband-Klemmeinrichtung 12 stattfindet. Damit treten in diesem Bereich praktisch keine Querbeanspruchungen des Gurtbandes 22 auf, die wegen der ab dieser Stelle höchsten Zugbelastung des Gurtbands bei herkömmlichen Gurtband-Klemmeinrichtungen eine Neigung des Gurtbandes fördern, gerade an dieser Stelle zu reißen.

Wegen der symmetrischen Ausbildung der Klemmkeile 46, 48 findet bei Belastung der Gurtband-Klemmeinrichtung 12 keine Relativbewegung in Richtung des Gurtbandverlaufs zwischen ihnen statt, was sich ebenfalls günstig auf die Belastbarkeit des Gurtbandes 22 auswirkt. Damit auch im normalen Betrieb, wenn die Klemmkeile 46, 48 mehr oder weniger häufig eingesteuert werden und dabei am Gurtband 22 angreifen, kein die Betriebssicherheit beeinträchtigender Verschleiß stattfindet, werden die Klemmkeile 46, 48 vorzugsweise gemeinsam eingesteuert. Da die Klemmflächen 50, 52 bis zum Kontakt mit dem Gurtband 22 parallel zu diesem verlaufen, erfolgt eine sanfte Mitnahme der Klemmkeile 46, 48 durch das Gurtband 22 in dessen Abzugsrichtung G, sobald ein weiterer Gurtbandabzug stattfindet. Zur Einsteuerung der Klemmkeile 46, 48 kann der Umlenkhebel 36 entsprechend ausgebildet sein, oder die Klemmkeile 46, 48 sind in einer in der Zeichnung nicht sichtbaren Weise formschlüssig miteinander verbunden, etwa durch seitlich des Gurtbandes übergreifende Führungen, so daß sie sich stets gemeinsam in Gurtabzugsrichtung G bewegen.

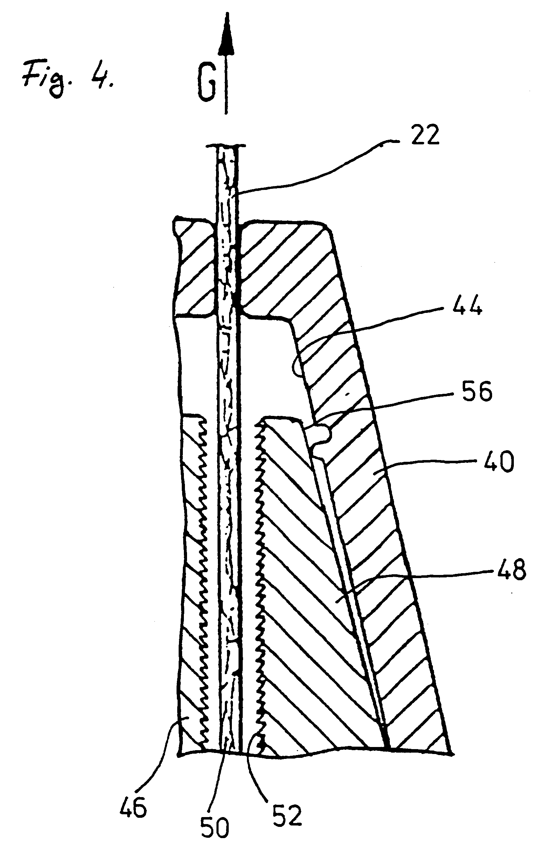

Um zu gewährleisten, daß die Klemmflächen 50, 52 in der Ruhestellung parallel zum Gurtband 22 gehalten werden und insbesondere bei hohen Belastungen, wie einem Fahrzeugaufprall, die Gleitflächen 54 und 56 flächig an den Stützflächen 42 und 44 anliegen, ist in der Stützfläche 42 und 44 jeweils eine Rippe 402 und 404 sowie eine Rille 406 und 408 vorgesehen. Deutlich ist diese Ausbildung der Figur 4 zu entnehmen, wo der Übersichtlichkeit halber lediglich eine Hälfte des Klemmgehäuses 40 dargestellt ist.

Bei geringen Belastungen wird die Gleitfläche 56 auf der Rippe 404 geführt und somit die Klemmflächen 50 und 52 parallel zum Gurtband 22 gehalten. Die Klemmfläche 52 greift mit Betätigen der Klemmeinrichtung 12 mit ihrer ganzen Fläche an das Gurtband 22 an, so daß dieses gleichmäßig durch die gesamte Klemmfläche 52 belastet wird. Entsprechendes gilt auch für den Klemmkeil 46 und die Rippe 402.

Beispielsweise bei einem Fahrzeugaufprall, bei dem hohe Belastungen auftreten, wird der Klemmkeil 48 zunächst in Richtung G des Gurtabzugs an das Gurtband 22 herangeführt, so daß die Klemmfläche 52 an dem Gurtband 22 anliegt. Mit zunehmender Belastung drückt der Klemmkeil 48 die Rippe 404 unter plastischer Verformung in die benachbarte Rille 408. Die Gleitfläche 56 liegt dann flächig an der Stützfläche 44 an und es ergibt sich ein in Richtung G des Gurtbandabzugs offener spitzer Winkel zwischen der Klemmfläche 52 und dem Gurtband 22. Ein entsprechend synchrones Verfahren bei einer hohen Be- lastung ergibt sich auch in bezug auf den Klemmkeil 46, der die Rippe 402 unter plastischer Verformung in die Rille 406 drückt.

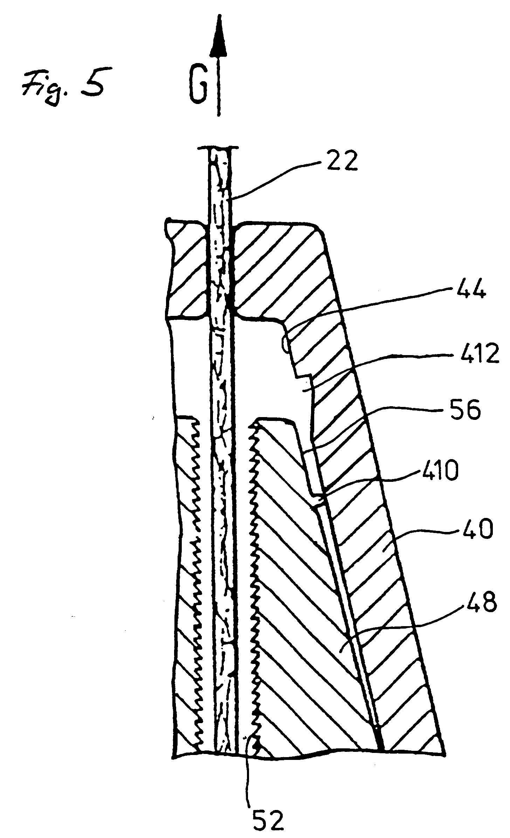

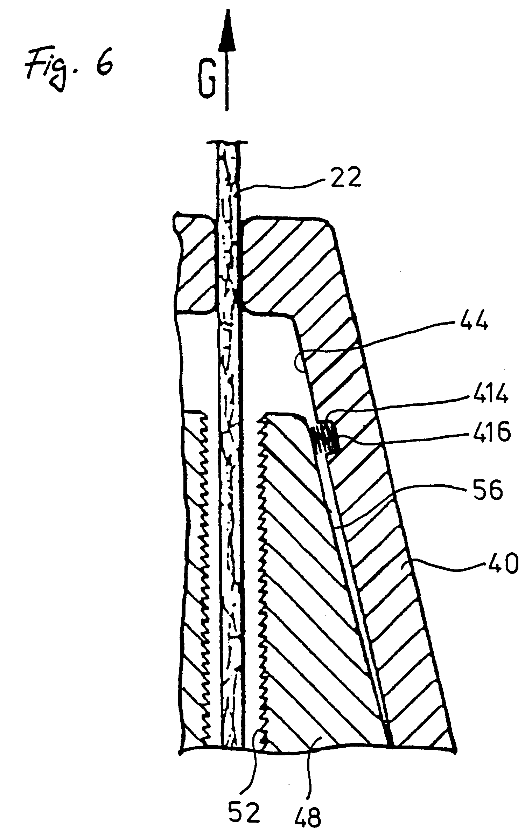

Alternativ zu der in Fig. 3 und 4 dargestellten Ausführungsform können die Ausführungsformen, die in Fig. 5 und 6 dargestellt sind, verwendet werden.

Gemäß Fig. 5 ist eine Rippe 410 in dem Klemmkeil 48 auf der Gleitfläche 56 angebracht, so daß der Klemmkeil 48 über die Rippe 410 an dem Klemmgehäuse 40 abgestützt wird. In dem Klemmgehäuse 40 ist eine Vertiefung 412 in der Stützfläche 44. Die Vertiefung 412 ist rampenförmig ausgebildet und mit Abstand zur Rippe 410 angeordnet. Der Abstand und die Rampenform sind dabei so gewählt, daß, wenn die Klemmfläche 52 auf dem Gurtband 22 anliegt, die Rippe 410 mit dem Zusammendrücken des Gurtbands 22 in die Vertiefung 412 eintaucht. Eine entsprechende Ausbildung weisen auch der Klemmkeil 46 und die Stützfläche 42 auf, die der Einfachheit halber hier nicht dargestellt sind. Durch diese Ausführungsform wird die Rippe 410 bei hohen Belastungen nicht zerstört.

Eine andere, in Fig. 6 dargestellte Ausführungsform weist für die Winkeländerung der Klemmkeile 46 und 48 gegenüber dem Gurtband 22 eine Feder 414 in einer Mulde 416 auf. Die Mulde 416 ist in der Stützfläche 44 des Klemmgehäuses 40 angeordnet und die Feder 414 liegt an der Gleitfläche 56 des Klemmkeils 48 an. Die Feder 414 ist so dimensioniert, daß sie mit Überschreiten einer vorbestimmten Belastung durch den Klemmkeil 48 in die Mulde 416 gedrückt wird. Die Gleitfläche 56 liegt dann flächig an der Stützfläche 44 an, wenn die Feder 414 vollständig durch den Klemmkeil 48 in die Mulde 416 gedrückt ist. Eine entsprechende Anordnung und Ausbildung der Feder 414 und der Mulde 416 ist auch an dem anderen Klemmkeil 46 vorgesehen, so daß eine synchrone Bewegung der beiden Klemmkeile 46 und 48 ermöglicht wird.

Mit den beschriebenen Gurtband-Klemmeinrichtungen wurden im Versuch je nach Gurtbandmaterial bei einer statischen Reißfestigkeit von etwa 24 kN dynamische Reißfestigkeiten bis zu 20 kN erzielt. Es zeigte sich, daß die dynamischen Reißfestigkeiten deutlich näher an den theoretisch maximal zu erwartenden statischen Reißfestigkeiten liegen als bei bisher bekannten Klemmeinrichtungen. Zudem erwies sich die Gurtband-Klemmeinrichtung als unempfindlich gegenüber Verschmutzungen des Gurtes mit Öl, Fett, Hohlraumkonservierungs- und anderen Stoffen, da deren Anwesenheit weder die Reißfestigkeit verminderte noch einen vergrößerten Gurtbandauszug unter Last zur Folge hatte.

Die beschriebenen Gurtband-Klemmeinrichtungen halten jeweils das Gurtband also zuverlässig fest und schonen es zugleich. Von den zahlreichen Möglichkeiten, diese Gurtband-Klemmeinrichtung zudem mit geringem Gewicht und kostengünstig herzustellen, seien nur einige genannt: Die Klemmkeile 46, 48 können aus Kunststoff, durch Leichtmetall-Druckguß oder aus Metall-Hohlprofilen hergestellt sein. Das vorzugsweise aus Stahl oder Sintermaterial bestehende Klemmgehäuse 40 kann auch durch Al- oder Zn-Druckguß hergestellt sein. Rippen 58, die in Fig. 1 sichtbar sind, dienen zur Versteifung des Klemmgehäuses 40.

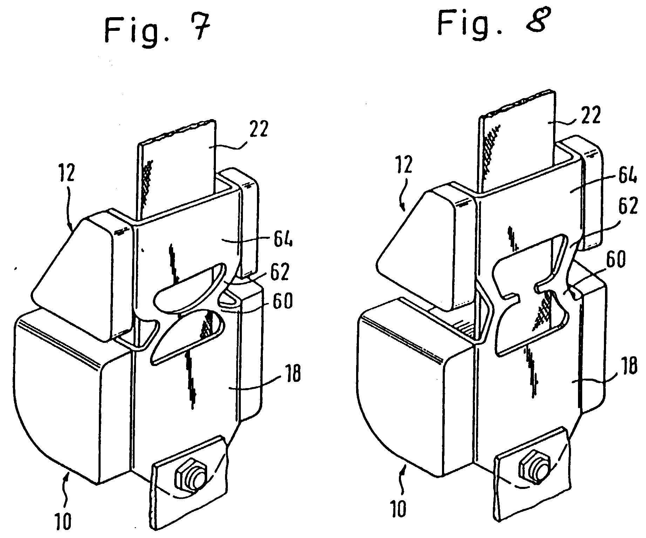

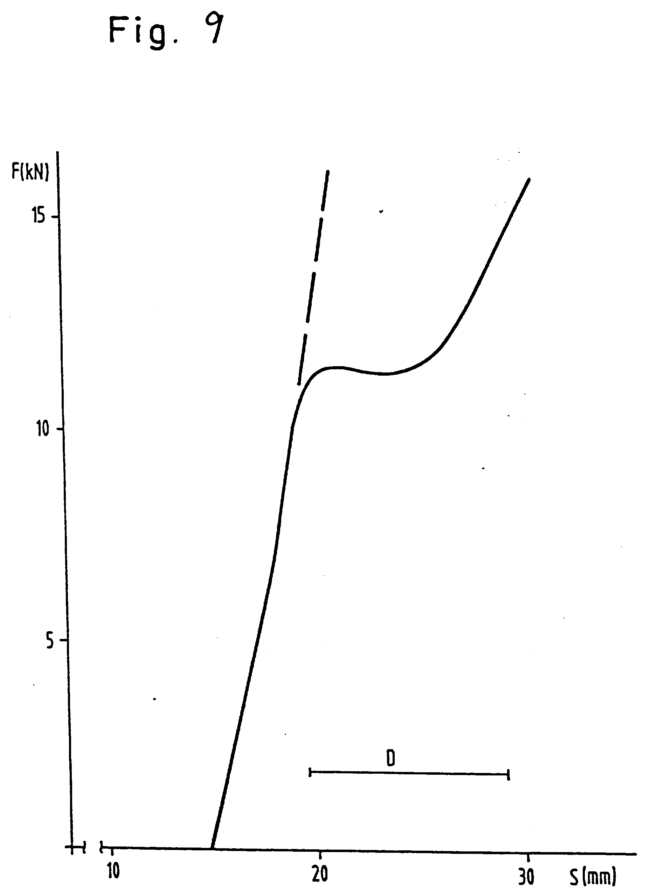

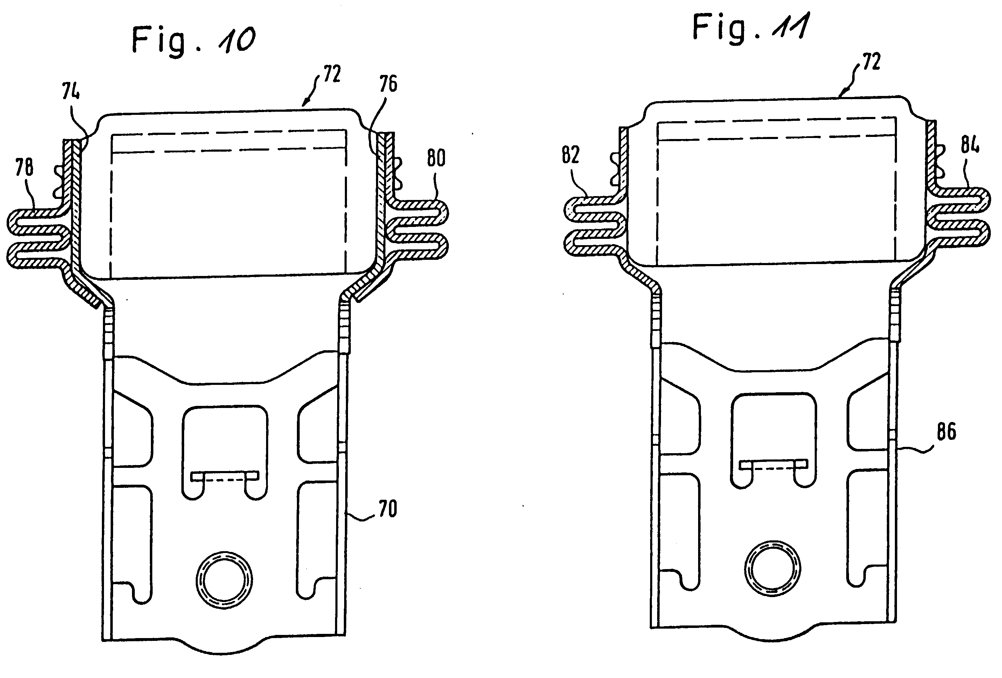

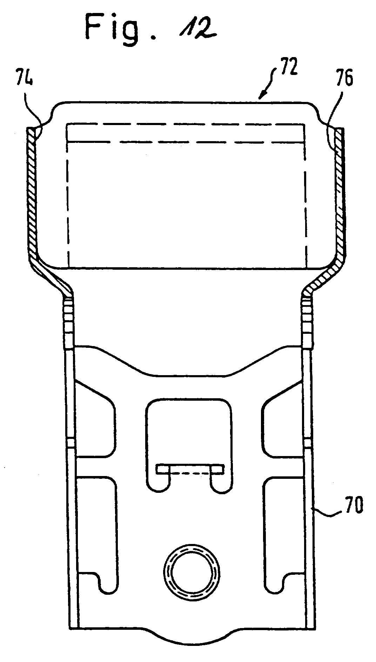

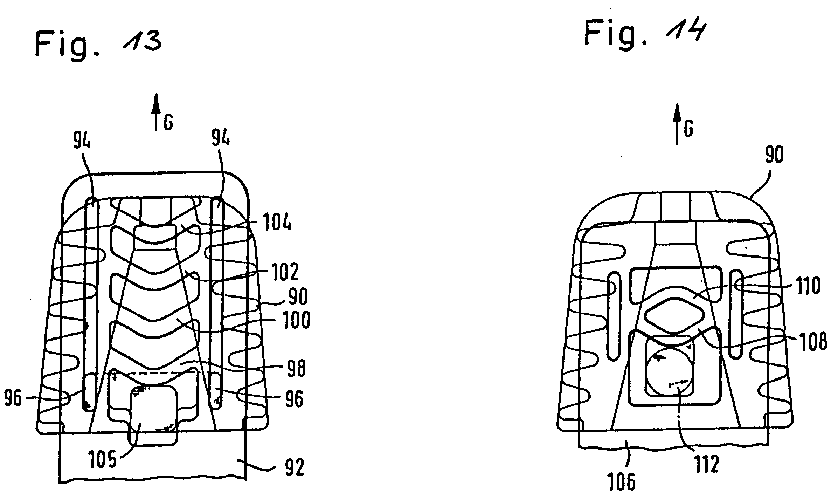

Die Ausbildung und Funktion der in Fig. 2 nur teilweise sichtbaren Stege 14 und 16, die den Gurtaufroller 10 und die Gurtband-Klemmeinrichtung 12 miteinander verbinden, wird zunächst anhand der Figuren 7 und 8 erläutert. Bei der dort dargestellten Ausführungsform des Sicherheitsgurt-Rückhaltesystems ist das Gehäuse 18 des Gurtaufrollers 10 über einen bogenförmigen Steg 60 mit einem entgegengesetzt gebogenen Steg 62 des Gehäuses 64 der Gurtband-Klemmeinrichtung 12 verbunden. Die Stege 60, 62 sind an ihren Scheiteln miteinander verschmolzen und an ihren freien Enden jeweils an das zugehörige Gehäuse angeschlossen. Die Breite der bogenförmigen Schenkel 60, 62 ist im Bereich ihrer Scheitel am geringsten, so daß dort eine Sollbruchstelle entsteht. Wenn der vorbestimmte Wert erreicht ist, bis zu dem die Gurtbandblockierung allein durch die Gurtband-Klemmeinrichtung erfolgen soll, beginnen die Stege 60, 62 sich plastisch zu verformen. Dabei entfernen sich die Gehäuse 18, 64 voneinander. Ab einem bestimmten Belastungswert reißen die Stege 60, 62 an ihrer Vereinigungsstelle im Bereich ihrer Scheitel ab. Die verbleibenden Stegabschnitte werden weiter gedehnt, bis etwa der in Fig. 8 gezeigte Zustand erreicht ist. Die Strecke D, um die sich die beiden Gehäuse 18, 64 voneinander entfernt haben, reicht aus, um die Sperrzahnräder 24 der Gurtspule 20 in Eingriff mit den gehäusefesten Sperrverzahnungen 26 zu verlagern.

Die Stege 14 und 16 der Figuren 1 und 2 verformen sich bei erhöhter Belastung prinzipiell ebenso wie im Zusammenhang mit den Fig. 7 und 8 erläutert. Unterschiedlich ist, daß die Stege 14 und 16 winklige Fortsätze des Gehäuses 18 des Gurtaufrollers 10 sind, die mit der Gurtband-Klemmeinrichtung 12 beispielsweise über Nieten 66 verbunden sind. Die beiden Stege 14 und 16 sind hier nicht über eine Sollbruchstelle miteinander verbunden, da sie relativ breit und von vornherein steifer sind.

Bei der plastischen Verformung der Stege 14, 16 bzw. 60, 62 wird Arbeit verrichtet, also Energie absorbiert, wodurch in erwünschter Weise Belastungsspitzen im Gurtsystem abgebaut werden. Die Energieabsorption erfolgt etwa im Verlauf der in Fig. 9 eingezeichneten Strecke D, wobei S die gesamte Gurtbandlängung einschließlich der Gehäuseverformung des Systems ist. Der in Fig. 9 eingezeichnete Graph veranschaulicht die auf das Gurtband wirkende Kraft F als Funktion der Gurtbandlängung s bei einem System nach den Fig. 1 und 2 oder 7 und 8. Gestrichelt dargestellt ist der weitaus steilere Kraftverlauf bei einer feststehenden Gurtband-Klemmeinrichtung.

Die für die Energieabsorption genutzte Strecke D kann bis zu etwa 50 mm betragen und wird vorzugsweise so gewählt, daß die Gurtband-Klemmeinrichtung 12 nicht über einen ihr immanenten kritischen Wert hinaus belastet wird und darüber hinaus gehende Kräfte vom Gurtaufroller 10 aufgenommen werden, wobei der diesen Kräften entsprechende Filmspuleneffekt zu berücksichtigen ist. Der aufgrund des Filmspuleneffekts noch erfolgende Gurtbandabzug ist aber deutlich geringer als bei einem System ohne Gurtband-Klemmeinrichtung und für die gemäß Fig. 9 abgeflachte Krafteinleitung in das System sogar erwünscht, da eine weitere Energieabsorption stattfindet. Wegen des Nichtauftretens von Kraftspitzen ist es auch möglich, kostengünstige und leichte Systemelemente zu verwenden. So können z.B. die Gurtspule und /oder ihre tragende Welle bzw. die Klemmkeile aus Kunststoff sein.

Die plastisch verformbaren Verbindungsmittel können in ganz unterschiedlicher Weise ausgeführt sein. Einige vorteilhafte Ausführungen werden im folgenden beschrieben.

In Fig. 10 sind in Draufsicht ein Gurtspulengehäuse 70, ein Teil einer Gurtband-Klemmeinrichtung 72 und diese verbindende, seitlich angebrachte Stege 74, 76 gezeigt. Die Stege 74, 76 sind so ausgelegt, daß sie bei einer eine Schwelle von beispielsweise 10-12 kN übersteigenden Kraft zwischen der Gurtband-Klemmeinrichtung 72 und dem Gurtspulengehäuse 70 abreißen. Danach längen sich seitlich übergreifende, in einem Teilbereich zusammengefaltete Dehnungselemente 78, 80 plastisch, lassen aber eine Auseinanderbewegung des Gurtspulengehäuses 70 und der Gurtband-Klemmeinrichtung 72 nur bis zu ihrer Streckung zu.

Die Ausführungsform nach Fig. 11 unterscheidet sich von derjenigen nach Fig. 10 nur dadurch, daß einen Schwellwert bestimmende Stege fehlen und Dehnungselemente 82, 84 direkt am Gurtspulengehäuse 86 angebracht sind. Die Dehnungselemente 82, 84 können auch einstückige Fortsätze des Gurtspulengehäuses 86 sein.

Die Ausführungsform nach Fig. 12 unterscheidet sich von derjenigen nach Fig. 10 nur dadurch, daß die zusammengefalteten Dehnungselemente 78 und 80 fehlen und die Stege 74 und 76 durch plastische Verformung nachgeben. Die Stege 74 und 76 lassen eine begrenzte Entfernung der Gurtbandklemmeinrichtung 12 von dem Gurtaufroller 10 zu, wenn die auf das Gurtband 22 ausgeübte Kraft einen vorbestimmten Wert übersteigt.

Weitere Ausführungsformen für plastisch verformbare Verbindungsmittel ergeben sich aus den Figuren 13 und 14, in denen zur Orientierung und schematisch jeweils eine der Gurtband-Klemmeinrichtung 12 aus Fig. 1 entsprechende Gurtband-Klemmeinrichtung 90 eingezeichnet ist. Das lasttragende Gehäuse des Gurtaufrollers ist nur teilweise gezeigt, und zwar in Fig. 13 in Form eines laschenförmigen Fortsatzes 92 dieses Gehäuses. Ein oder mehrere solcher Fortsätze 92 verlaufen entlang je einer Seite der Gurtband-Klemmeinrichtung 90. Jeder Fortsatz 90 weist Langlöcher 94 auf, in denen die Gurtband-Klemmeinrichtung 90 mittels vorspringender Zapfen 96 in Gurtabzugsrichtung G beweglich gelagert ist. Der Fortsatz 92 in Fig. 13 weist vier freistehende, quer zur Gurtabzugsrichtung G verlaufende Stege 98, 100, 102 und 104 auf, die durch Materialaussparungen im Fortsatz 92 gebildet sind. Das lasttragende Gehäuse der Gurtband-Klemmeinrichtung 90 weist einen Ansatz 105 auf, der in eine der Aussparungen im Fortsatz 92 ragt und in Gurtabzugsrichtung G von dem Steg 98 abgestützt ist. Bei einer Belastung des Sicherheitsgurt-Rückhaltesystems oberhalb eines durch die Steifigkeit der in Richtung des Ansatzes 105 abgewinkelten Stege 98, 100, 102 und 104 gegebenen Schwellwertes verformen sich die Stege 98, 100, 102 und 104 nacheinander plastisch, wobei sie der Gurtband-Klemmeinrichtung 90 eine Bewegung unter Energieabgabe in Gurtabzugsrichtung G ermöglichen.

Die Ausführungsform nach Fig. 13 ist für eine Bewegung der Gurtband-Klemmeinrichtung 90 um etwa 30 mm ausgelegt, während die Ausführungsform nach Fig. 14 für eine Bewegung der Gurtband-Klemmeinrichtung 90 um etwa 10 mm ausgelegt ist. Die Ausführungsform nach Fig. 14 unterscheidet sich von der zuvor beschriebenen im wesentlichen dadurch, daß ein laschenförmiger Fortsatz 106 des Gurtaufrollergehäuses lediglich zwei Stege 108 und 110 aufweist, die in einander entgegengesetzten Richtungen abgewinkelt sind. An dem Steg 108 stützt sich wie zuvor beschrieben ein Ansatz 112 der Gurtband-Klemmeinrichtung 90 ab.

Die genannten Vorzüge der Komponenten des Sicherheitsgurt-Rückhaltesystems, insbesondere die wirksam gesteigerte Bruchlastfestigkeit, die Leichtbaufähigkeit und die Eignung als Baukastensystem, gelten in besonderem Maße für das Gesamtsystem, wenn der Gurtaufroller mit nachgiebig gelagerter Gurtspule, die Gurtband-Klemmeinrichtung mit Doppelkeil und die elastisch verformbaren Verbindungsmittel wie beschrieben miteinander zusammenwirken.

## Patentansprüche

1. Sicherheitsgurt-Rückhaltesystem für Fahrzeuge, mit einem Gurtaufroller (10) und einer diesem nachgeordneten Gurtband-Klemmeinrichtung (12) mit zwei einander gegenüberliegend beidseitig des Gurtbandes (22) angeordneten Klemmkeilen (46, 48), die sich mit vom Gurtband (22) abgewandten Gleitflächen (54, 56) gegen gehäusefeste Stützflächen (42, 44) abstützen und fahrzeugsensitiv und/oder gurtbandsensitiv aus einer Ruhestellung gemeinsam mit ihren einander gegenüberliegenden Klemmflächen (50, 52) in Richtung auf eine in Gurtabzugsrichtung gelegene Klemmstellung in Anlage am Gurtband (22) beweglich sind, dadurch gekennzeichnet, daß der fahrzeugsensitiv und/oder gurtbandsensitiv sperrbare Gurtaufroller (10) und die Gurtband-Klemmeinrichtung (12) durch Verbindungsmittel (14, 16; 60, 62; 74, 76, 80; 82, 84; 92, 104; 106, 112) derart miteinnander verbunden sind, daß die Krafteinleitung in das Rückhaltesystem stets über die Gurtband-Klemmeinrichtung (12), die Verbindungsmittel (14, 16; 60, 62; 74, 76, 80; 82, 84; 92, 104; 106, 112) und den Gurtaufroller (10) erfolgt, und daß die Verbindungsmittel unter plastischer Verformung nachgeben und eine begrenzte Entfernung der Gurtband-Klemmeinrichtung (12) von dem Gurtaufroller (10) zulassen, wenn die auf das Gurtband (22) ausgeübte Kraft einen vorbestimmten Wert übersteigt.

2. Sicherheitsgurt-Rückhaltesystem nach Anspruch 1, dadurch gekennzeichnet, daß die lasttragenden Gehäuse (18, 64) des Gurtaufrollers (10) und der Gurtband-Klemmeinrichtung (12) durch verformbare Stege (14, 16; 60, 62; 74, 76) miteinander verbunden sind.

3. Sicherheitsgurt-Rückhaltesystem nach Anspruch 2, dadurch gekennzeichnet, daß die verformbaren Stege (14, 16; 60, 62) bogenförmig und an die einander benachbarten Gehäuseenden angeschlossen sind.

4. Sicherheitsgurt-Rückhaltesystem nach Anspruch 3, dadurch gekennzeichnet, daß die verformbaren Stege (60, 62) an ihren Scheiteln miteinander vereinigt sind und im Bereich ihrer Vereinigung eine Sollbruchstelle bilden.

5. Sicherheitsgurt-Rückhaltesystem nach Anspruch 1, dadurch gekennzeichnet, daß das lasttragende Gehäuse des Gurtaufrollers wenigstens einen laschenförmigen Fortsatz (92, 106) aufweist, an dem das lasttragende Gehäuse der Gurtband-Klemmeinrichtung (90) in Gurtabzugsrichtung (G) verschiebbar gelagert ist und der wenigstens einen quer zur Gurtabzugsrichtung verlaufenden, verformbaren Steg (98, 100, 102, 104; 108, 110) aufweist, und daß das lasttragende Gehäuse der Gurtband-Klemmeinrichtung (90) wenigstens einen Ansatz (105, 112) aufweist, mit dem es sich gegen den Steg (98, 108) entgegen der Gurtabzugsrichtung (G) abstützt.

6. Sicherheitsgurt-Rückhaltesystem nach Anspruch 5, dadurch gekennzeichnet, daß mehrere bogenförmige Stege (98, 100, 102, 104; 108), deren Scheitel dem Ansatz (105, 112) zugewandt sind, parallel zu- und im Abstand voneinander angeordnet sind.

7. Sicherheitsgurt-Rückhaltesystem nach einem der vorangehenden Ansprüche, dadurch gekennzeichnet, daß die Klemmflächen (50, 52) in der Ruhestellung die Gleitflächen (54, 56) durch ein Haltemittel (402, 404; 410; 414) in einer geneigten Stellung zu den Stützflächen (42, 44) und mit ihren Klemmflächen (50, 52) parallel zum Gurtband (22) gehalten werden und daß dieses Haltemittel (402, 404; 410; 414) unter Last unwirksam wird, so daß die Gleitflächen (54, 56) in Flächenkontakt mit den Stützflächen (42, 44) gelangen und einen Winkel von etwa einem Grad miteinander bilden, der in Richtung (9) des Gurtabzugs offen ist.

8. Sicherheitsgurt-Rückhaltesystem nach Anspruch 7, dadurch gekennzeichnet, daß eine quer zur Richtung (G) des Gurtbandabzugs verlaufende Rippe (402, 404) an der Gleitfläche (54, 56) und/oder Stützfläche (42, 44) angeordnet ist, die sich ab einer vorbestimmten Belastung plastisch verformt und/oder ab einer vorbestimmten Belastung abgeschert wird, so daß die Gleitflächen (54, 56) flächig an den Stützflächen (42, 44) anliegen.

9. Sicherheitsgurt-Rückhaltesystem nach Anspruch 8, dadurch gekennzeichnet, daß in der Fläche (54, 56) bzw. (42, 44), an der die Rippe (402, 404) angeordnet ist, neben der Rippe (402, 404) eine Rille (406, 408) angeordnet ist, in die die Rippe (402, 404) unter Last ausweicht.

10. Sicherheitsgurt-Rückhaltesystem nach Anspruch 7, dadurch gekennzeichnet, daß eine quer zur Richtung (G) des Gurtbandabzugs verlaufende Rippe (410) an der Gleitfläche (54, 56) und/oder Stützfläche (42, 44) angeordnet ist und eine Vertiefung (412) in der gegenüberliegenden Stützfläche (42, 44) bzw. Gleitfläche (54, 56) derart angeordnet und ausgebildet ist, daß bei Annäherung an die Klemmstellung die Rippe (410) in die Vertiefung (412) eintaucht und die Gleitflächen (54, 56) flächig an den Stützflächen (42, 44) anliegen.

11. Sicherheitsgurt-Rückhaltesystem nach Anspruch 7, dadurch gekennzeichnet, daß in einer Mulde (416) in der Stützfläche (42, 44) und/oder Gleitfläche (54, 56) eine Feder (414) vorgesehen ist, die sich ab einer bestimmten Belastung elastisch verformt, so daß die Gleitflächen (54, 56) flächig an den Stützflächen (42, 44) anliegen.

12. Sicherheitsgurt-Rückhaltesystem nach einem der vorangehenden Ansprüche, dadurch gekennzeichnet, daß die Gleitflächen (54, 56) unter einem Winkel von etwa 27 Grad zueinander geneigt sind.

13. Sicherheitsgurt-Rückhaltesystem nach einem der vorstehenden Ansprüche, dadurch gekennzeichnet, daß die Stützflächen (42, 44) und/oder die Gleitflächen (54, 56) mit einer Gleitbeschichtung versehen sind.

14. Sicherheitsgurt-Rückhaltesystem nach einem der vorstehenden Ansprüche, dadurch gekennzeichnet, daß die Klemmflächen (50, 52) der Klemmkeile (46, 48) reibungsfördernd strukturiert sind und daß die reibungsfördernde Struktur in einer das Gurtband (22) schonenden Weise an das Gurtbandmaterial angepaßt ist.

## Claims

1. Safety belt restraining system for vehicles comprising a belt retractor (10) and a webbing clamping means (12) arranged downstream of the retractor (10) and having two clamping wedges (46, 48) which are arranged opposite each other on either side of the webbing (22), the clamping wedges having slide faces (54, 56) remote from the webbing and bearing against support surfaces (42, 44) on the housing, and the wedges being movable jointly in vehicle-sensitive and/or webbing-sensitive manner out of a rest position and with their mutually opposite clamping faces (50, 52) in the direction towards a clamping position located in the belt withdrawal direction into engagement with the webbing (22), characterized in that the belt retractor (10) blockable in vehicle-sensitive and/or webbing-sensitive manner and the webbing clamping means (12) are connected together by connecting means (14, 16; 60, 62; 74, 76, 80; 82, 84; 92, 104; 106, 112) in such manner that force is introduced into the restraining system always via the webbing clamping means (12), the connecting means (14, 16; 60, 62; 74, 76, 80; 82, 84; 92, 104; 106, 112) and the belt retractor (10), and that the connecting means yield with plastic deformation and permit a limited moving of the webbing clamping means (12) away from the belt retractor (10) when the force exerted on the webbing (22) exceeds a predetermined value.

2. Safety belt restraining system according to claim 1, characterized in that the loadbearing housings (18, 64) of the belt retractor (10) and the webbing clamping means (12) are connected together by deformable webs (14, 16; 60, 62; 74, 76).

3. Safety belt restraining system according to claim 2, characterized in that the deformable webs (14, 16; 60, 62;) are arcuate and are joined to the mutually adjacent housing ends.

4. Safety belt restraining system according to claim 3, characterized in that the deformable webs (60, 62) are joined together at their apex portions and in the region of their merging form a zone susceptible of breaking under load.

5. Safety belt restraining system according to claim 1, characterized in that the loadbearing housing of the belt retractor comprises at least one tab-like extension (92, 106) on which the loadbearing housing of the webbing clamping means (90) is mounted movably in the belt withdrawal direction (G) and which has at least one deformable web (98, 100, 102, 104; 108, 110) extending transversely of the belt withdrawal direction, and that the loadbearing housing of the webbing clamping means (90) comprises at least one nose (104, 112) with which it bears oppositely to the belt withdrawal direction (G) against the web (98, 108).

6. Safety belt restraining system according to claim 1, characterized in that a plurality of arcuate webs (98, 100, 102, 104; 108) are arranged in parallel and spaced from each other, having their apex facing said extension (105, 112).

7. Safety belt restraining system according to any one of the preceding claims, characterized in that the clamping faces (50, 52) in said rest position by means of said holding means (402, 404; 410, 414) hold said slide faces (54, 56) inclined to said support surfaces (42, 44) and their clamping faces (50, 52) parallel to the webbing (22), said holding means (402, 404; 410, 414) becoming ineffective under load so that the slide faces (54, 56) make surface contact with said support surfaces (42, 44) and the clamping faces (50, 52) form an angle of about one degree with each other which is open in the direction (9) of belt withdrawal.

8. Safety belt restraining system according to claim 7, characterized in that a rib (402, 404) is arranged on one of the slide faces (54, 56) and the support surfaces (42, 44) and extends transversely to the direction (G) of the belt withdrawal, said rib (402, 404) being plastically deformed and/or sheared off under a predetermined load so that the slide faces (54, 56) make a surface contact with the support surfaces (42, 44).

9. Safety belt restraining system according to claim 8, characterized in that a groove (406, 408) is arranged adjacent to the rib (402, 404) in the surface (54, 56) or (42, 44) provided with the rib (402, 404), said rib (402, 404) yielding under load into said groove.

10. Safety belt restraining system according to claim 7, characterized in that a rib (410) extending transversely to the direction (G) of belt withdrawal is arranged on the slide faces (54, 56) and/or the support surfaces (42, 44), and a recess (412) is formed in the opposite support surface (42, 44) or slide face (54, 56) so that the rib (410), upon approaching of the clamping position, penetrates into the recess (412) and the sliding faces (54, 56) make surface contact with the support surfaces (42, 44).

11. Safety belt restraining system according to claim 7, characterized in that a spring (414) is provided in a cavity (416) in one of the support surfaces (42, 44) and slide faces (54, 56), said spring (414) being resiliently compressed under a predetermined load so that the slide faces (54, 56) make surface contact with the support surfaces (42, 44).

12. Safety belt restraining system according to any one of the preceding claims, characterized in that the slide faces (54, 56) are inclined to each other at an angle of about 27°.

13. Safety belt restraining system according to any one of the preceding claims, characterized in that the support surfaces (42, 44) and/or the slide faces (54, 56) are provided with a low-friction coating.

14. Safety belt restraining system according to any one of the preceding claims, characterized in that the clamping faces (50, 52) of the clamping wedges (46, 48) have a texture promoting friction and that the friction promoting texture is adapted to the webbing material in a manner preserving its integrity.

## Revendications

1. Système de retenue de ceinture de sécurité pour véhicules, comprenant un enrouleur (10) de ceinture et un dispositif (12) de serrage de la sangle disposé en aval de celui-ci et comprenant deux coins de serrage (46, 48) qui sont en face l'un de l'autre de part et d'autre de la sangle (22), dont des surfaces de glissement (54, 56) tournées à l'opposé de la sangle (22) reposent contre des surfaces d'appui (42, 44) solidaires du boîtier et dont les surfaces de serrage opposées (50, 52) sont déplaçables ensemble, du fait de leur sensibilité au véhicule et/ou de leur sensibilité à la sangle, d'une position de repos à une position de serrage située dans le sens du déroulement de la ceinture de manière qu'elles s'appliquent contre la sangle (22), caractérisé en ce que l'enrouleur (10) de la ceinture, qui est blocable en fonction de sa sensibilité au véhicule et/ou de sa sensibilité à la sangle, ainsi que le dispositif de serrage (12) de la sangle sont reliés l'un à l'autre par des éléments de liaison (14, 16 ; 60, 62 ; 74, 76, 80 ; 82, 84 ; 92, 104 ; 106, 112) de manière que la transmission des forces au système de retenue s'effectue toujours par le dispositif (12) de serrage de la sangle, les éléments de liaison (14, 16 ; 60, 62 ; 74, 76, 80 ; 82, 84 ; 92, 104 ; 106, 112) et l'enrouleur de la ceinture (10), et en ce que les éléments de liaison cèdent par déformation plastique et autorisent le dispositif (12) de serrage de la sangle à s'éloigner sur une distance limitée de l'enrouleur (10) de la ceinture lorsque la force exercée sur la sangle (22) dépasse une valeur prédéterminée.

2. Système de retenue de ceinture de sécurité selon la revendication 1, caractérisé en ce que le boîtier (18, 64) de l'enrouleur (10) de ceinture et celui du dispositif (12) de serrage de la sangle qui supportent les charges sont reliés l'un à l'autre par des éléments déformables (14, 16 ; 60, 62 ; 74, 76).

3. Système de retenue de ceinture de sécurité selon la revendication 2, caractérisé en ce que les éléments déformables (14, 16 ; 60, 62) sont arqués et raccordés aux extrémités voisines des boîtiers.

4. Système de retenue de ceinture de sécurité selon la revendication 3, caractérisé en ce que les éléments déformables (60, 62) sont réunis à leurs sommets et forment dans la zone de leur réunion un point de rupture.

5. Système de retenue de ceinture de sécurité selon la revendication 1, caractérisé en ce que le boîtier de l'enrouleur de ceinture qui supporte les charges comprend au moins un prolongement en forme de languette (92, 106) sur lequel le boîtier du dispositif (90) de serrage de sangle qui supporte les charges est monté déplaçable dans le sens (G) de déroulement de la ceinture, ce prolongement comprenant au moins un élément déformable (98, 100, 102, 104 ; 108, 110) qui est orienté perpendiculairement à la direction de déroulement de la ceinture, et en ce que le boîtier du dispositif (90) de serrage de la sangle qui supporte les charges comprend au moins un épaulement (105, 112) par lequel il prend appui contre l'élément (98, 108) en sens inverse de celui (G) du déroulement de la ceinture.

6. Système de retenue de ceinture de sécurité selon la revendication 5, caractérisé en ce que plusieurs éléments arqués (98, 100, 102, 104 ; 108), dont les sommets sont tournés vers l'épaulement (105, 112), sont disposés parallèlement les uns aux autres et à distance les uns des autres.

7. Système de retenue de ceinture de sécurité selon l'une des revendications précédentes, caractérisé en ce que les surfaces de serrage (50, 52) en position de repos maintiennent les surfaces de glissement (54, 56) dans une position inclinée par rapport aux surfaces d'appui (42, 44) au moyen d'un organe de retenue (402, 404 ; 410 ; 414) et leurs surfaces de serrage (50, 52) sont maintenues parallèles à la sangle (22), et en ce que ces organes de retenue (402, 404 ; 410 ; 414) sont inactifs sous charge, de sorte que les surfaces de glissement (54, 56) parviennent en contact de surface avec les surfaces d'appui (42, 44) et forment ensemble un angle d'environ 1 degré qui est ouvert dans le sens (9) de déroulement de la ceinture.

8. Système de retenue de ceinture de sécurité selon la revendication 7, caractérisé en ce qu'une nervure (402, 404) perpendiculaire à la direction (G) de déroulement de la ceinture et disposée sur la surface de glissement (54, 56) et/ou sur la surface d'appui (42, 44) se déforme plastiquement à partir d'une charge prédéterminée et/ou est cisaillée à partir d'une charge prédéterminée de manière que les surfaces de glissement (54, 56) reposent à plat contre les surfaces d'appui (42, 44).

9. Système de retenue de ceinture de sécurité selon la revendication 8, caractérisé en ce qu'une rainure (406, 408) dans laquelle la nervure (402, 404) s'engage sous charge est disposée à côté de cette nervure (402, 404) dans la surface (54, 56) ainsi que (42, 44) sur laquelle la nervure (402, 404) est disposée.

10. Système de retenue de ceinture de sécurité selon la revendication 7, caractérisé en ce qu'une nervure (410) est disposée perpendiculairement à la direction (G) de déroulement de la ceinture sur la surface de glissement (54, 56) et/ou sur la surface d'appui (42, 44) et un creux (412) est disposé et conformé dans la surface d'appui (42, 44) ou la surface de glissement (54, 56) opposée de manière qu'au moment de l'approche de la position de serrage, la nervure (410) plonge dans le creux (412) et que les surfaces de glissement (54, 56) reposent à plat contre les surfaces d'appui (42, 44).

11. Système de retenue de ceinture de sécurité selon la revendication 7, caractérisé en ce qu'un ressort (414) prévu dans un alvéole (416) de la surface d'appui (42, 44) et/ou de la surface de glissement (54, 56) se déforme élastiquement à partir d'une charge déterminée de manière que les surfaces de glissement (54, 56) reposent à plat contre les surfaces d'appui (42, 44).

12. Système de retenue de ceinture de sécurité selon l'une des revendications précédentes, caractérisé en ce que les surfaces de glissement (54, 56) sont inclinées l'une par rapport à l'autre en formant un angle d'environ 27 degrés.

13. Système de retenue de ceinture de sécurité selon l'une des revendications précédentes, caractérisé en ce que les surfaces d'appui (42, 44) et/ou les surfaces de glissement (54, 56) comportent un revêtement anti-friction.

14. Système de retenue de ceinture de sécurité selon l'une des revendications précédentes, caractérisé en ce que les surfaces de serrage (50, 52) des coins de serrage (46, 48) sont structurées de manière à accroître le frottement et en ce que la structure destinée à accroître le frottement est adaptée à la matière de la sangle (22) de manière à ménager cette dernière.
